# EUROPÄISCHE PATENTSCHRIFT

(11) **EP 4 072 757 B1**
(45) Veröffentlichungstag und Bekanntmachung des Hinweises auf die Patenterteilung: **06.09.2023**
(21) Anmeldenummer: 20816520.9
(22) Anmeldetag: 07.12.2020
(51) Int. Cl.: B23B 31/00, B23B 31/107

(54) **VORRICHTUNG ZUR DREHMOMENTÜBERTRAGUNG VON EINEM BOHRGERÄT AUF EINE BOHRKRONE**
DEVICE FOR TRANSMITTING TORQUE FROM A DRILLING DEVICE TO A CORE DRILL BIT
DISPOSITIF DE TRANSMISSION D'UN COUPLE DE ROTATION D'UN APPAREIL DE PERÇAGE À UNE COURONNE DE PERÇAGE

(30) Priorität: 11.12.2019 EP 19215082
(43) Veröffentlichungstag der Anmeldung: 19.10.2022
(73) Patentinhaber: Hilti Aktiengesellschaft, 9494 Schaan (LI)
(72) Erfinder: GOETZ, Florian, 6820 Frastanz (AT)
(74) Vertreter: Hilti Aktiengesellschaft Corporate Intellectual Property
(86) Internationale Anmeldenummer: PCT/EP2020/084806
(87) Internationale Veröffentlichungsnummer: WO 2021/115985

(56) Entgegenhaltungen:
- EP-B1- 1 211 005
- JP-A- S59 219 112
- US-A- 3 790 296
- US-A- 5 971 681

## Beschreibung

### Technisches Gebiet

Die vorliegende Erfindung betrifft eine Vorrichtung zur Übertragung eines Drehmomentes von einem Bohrgerät auf eine Bohrkrone gemäß dem Oberbegriff des Anspruchs 1.

### Stand der Technik

EP 1 211 005 B1 offenbart eine bekannte Vorrichtung zur Drehmomentübertragung von einem Bohrgerät auf eine Bohrkrone nach dem Oberbegriff des Anspruchs 1. Dabei ist die Vorrichtung zur Drehmomentübertragung zwischen dem Bohrgerät und der Bohrkrone angeordnet und überträgt das Drehmoment, das von einem Bohrmotor des Bohrgerätes erzeugt wird, auf die Bohrkrone. Die Vorrichtung zur Drehmomentübertragung umfasst eine Werkzeugaufnahme, die fest mit dem Bohrgerät verbunden ist oder über eine lösbare Verbindung mit dem Bohrgerät verbunden wird, und ein Einsteckende, das fest mit der Bohrkrone verbunden ist oder über eine lösbare Verbindung mit der Bohrkrone verbunden wird.

Das Einsteckende ist hülsenförmig aus einem ersten Außenkonusbereich, einem Nutbereich, einem zweiten Außenkonusbereich und einem Zylinderbereich aufgebaut und umfasst erste Längsnuten, die sich über den ersten Außenkonusbereich, den Nutbereich, den zweiten Außenkonusbereich und den Zylinderbereich erstrecken, und zweite Längsnuten, die sich über den zweiten Außenkonusbereich und den Zylinderbereich erstrecken.

Die Werkzeugaufnahme ist dreiteilig aus einem Grundkörper, einem Zwischenelement und einer Verriegelungseinrichtung aufgebaut. Die Verriegelungseinrichtung ist parallel zu einer Längsachse der Werkzeugaufnahme zwischen einer Aufnahmestellung und einer Verriegelungsstellung verstellbar, wobei das Einsteckende in der Aufnahmestellung in die Werkzeugaufnahme einführbar ist und in der Verriegelungsstellung mit der Werkzeugaufnahme verbunden ist. Das Zwischenelement ist ringförmig ausgebildet mit einem inneren Mitnehmerbereich, der erste innere Drehmitnehmer mit einer ersten Breite und ersten Tiefe und zweite innere Drehmitnehmer mit einer zweiten Breite und zweiten Tiefe aufweist, und einem äußeren Mitnehmerbereich, der erste äußere Drehmitnehmer mit einer dritten Breite und dritten Tiefe aufweist. Der Grundkörper ist hülsenförmig ausgebildet mit einem Innenkonusbereich und einem Drehmitnahmebereich, der erste äußere Drehmitnahmenuten aufweist.

Im verbundenen Zustand der Werkzeugaufnahme und des Einsteckendes greifen die ersten inneren Drehmitnehmer des Zwischenelements in die ersten Längsnuten des Einsteckendes ein, die zweiten inneren Drehmitnehmer des Zwischenelements greifen in die zweiten Längsnuten des Einsteckendes ein und die ersten äußeren Drehmitnehmer des Zwischenelements greifen in die ersten äußeren Drehmitnahmenuten ein. Das Drehmoment, das von einem Bohrmotor des Bohrgerätes erzeugt wird, wird mittels der ersten und zweiten inneren Drehmitnehmer auf das Einsteckende übertragen.

Die aus EP 1 211 005 B1 bekannte Vorrichtung zur Drehmomentübertragung hat den Nachteil, dass die Werkzeugaufnahme und das Einsteckende nur für Bohrgeräte mit Leistungen bis ca. 2,5 kW zugelassen sind. Bei höheren Leistungen ist die Flächenpressung sehr hoch, was zu einer Beschädigung der inneren und äusseren Drehmitnehmer der Werkzeugaufnahme führen kann. Außerdem wird die Lebensdauer der Werkzeugaufnahme und des Einsteckendes reduziert.

### Darstellung der Erfindung

Die Aufgabe der vorliegenden Erfindung besteht darin, die Werkzeugaufnahme und das Einsteckende der aus EP 1 211 005 B1 bekannten Vorrichtung zur Drehmomentübertragung dahingehend weiterzuentwickeln, dass die neue Vorrichtung höhere Drehmomente als die alte Vorrichtung übertragen kann, das neue Einsteckende mit der alten Werkzeugaufnahme verbunden werden kann und die neue Werkzeugaufnahme nicht mit dem alten Einsteckende verbunden werden kann.

Diese Aufgabe wird bei der eingangs genannten Vorrichtung zur Übertragung eines Drehmoments erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass an der Grundfläche des Zwischenelements untere Drehmitnehmer und in der Ringschulter untere Drehmitnahmenuten angeordnet sind, wobei im verbundenen Zustand des Grundkörpers und des Zwischenelements die unteren Drehmitnehmer mit den unteren Drehmitnahmenuten zusammenwirken. Die unteren Drehmitnehmer, die mit den Drehmitnahmenuten der Ringschulter zusammenwirken, vergrößern die Kontaktfläche zwischen dem Grundkörper und dem Zwischenelement ohne die Höhe des Drehmitnahmebereichs zu vergrößern und ermöglichen dadurch die Übertragung größerer Kräfte und Drehmomente bei gleichbleibender Flächenpressung. Je grösser die Kontaktfläche ist, umso geringer ist die Flächenpressung zwischen dem Grundkörper und dem Zwischenelement oder bei gleichbleibender Flächenpressung können über die größere Kontaktfläche größere Kräfte und Drehmomente übertragen werden.

Bevorzugt fluchten die unteren Drehmitnehmer in einer Ebene senkrecht zur Längsachse der Werkzeugaufnahme mit den inneren Drehmitnehmern. Dadurch, dass die unteren Drehmitnehmer mit den inneren Drehmitnehmern fluchten, erfolgt die Kraft- und Drehmomentübertragung auf kürzestem Weg von der Werkzeugaufnahme auf das Einsteckende.

Bevorzugt fluchten die unteren Drehmitnehmer in einer Ebene senkrecht zur Längsachse der Werkzeugaufnahme mit den äußeren Drehmitnehmern. Dadurch, dass die unteren Drehmitnehmer mit den äußeren Drehmitnehmern fluchten, erfolgt die Kraft- und Drehmomentübertragung auf kürzestem Weg vom Grundkörper zum Zwischenelement.

In einer bevorzugten Ausführung weisen die inneren Drehmitnehmer des Zwischenelements erste innere Drehmitnehmer mit einer ersten Breite und ersten Tiefe und zweite innere Drehmitnehmer mit einer zweiten Breite und zweiten Tiefe auf und die Längsnuten des Einsteckendes weisen erste Längsnuten und zweite Längsnuten auf, wobei im verbundenen Zustand der Vorrichtung die ersten inneren Drehmitnehmer in die ersten Längsnuten und die zweiten inneren Drehmitnehmer in die zweiten Längsnuten eingreifen.

Bevorzugt sind die erste Tiefe der ersten inneren Drehmitnehmer und die zweite Tiefe der zweiten inneren Drehmitnehmer gleich und die zweiten Längsnuten des Einsteckendes erstrecken sich zusätzlich über den ersten Außenkonusbereich und den Nutbereich. Dadurch, dass bei der neuen Werkzeugaufnahme die zweite Tiefe der zweiten inneren Drehmitnehmer gleich der ersten Tiefe der ersten inneren Drehmitnehmer ist, weisen die zweiten inneren Drehmitnehmer bei der neuen Werkzeugaufnahme eine größere zweite Tiefe auf als bei der alten Werkzeugaufnahme. Die größere zweite Tiefe der zweiten inneren Drehmitnehmer vergrößert die Kontaktfläche der neuen Werkzeugaufnahme zum neuen Einsteckende und ermöglicht die Übertragung höherer Drehmomente vom Bohrgerät auf die Bohrkrone.

Die größere zweite Tiefe der zweiten inneren Drehmitnehmer verhindert, dass die neue Werkzeugaufnahme, die für leistungsstarke Bohrgeräte ausgelegt ist, mit dem alten Einsteckende, das nur für Bohrgeräte mit Leistungen bis ca. 2,5 kW zugelassen ist, verbunden werden kann und erhöht dadurch die Betriebssicherheit des Bohrgerätes. Da sich die zweiten Längsnuten des alten Einsteckende nur über den zweiten Außenkonusbereich erstrecken und eine geringere Tiefe als beim neuen Einsteckende aufweisen, sind die zweiten inneren Drehmitnehmer der neuen Werkzeugaufnahme zu tief und können nicht in die zweiten Längsnuten des alten Einsteckende eingeführt werden.

Da die zweiten Längsnuten beim neuen Einsteckende eine größere Tiefe aufweisen als beim alten Einsteckende, kann das neue Einsteckende mit der alten Werkzeugaufnahme verbunden werden. Die zweiten inneren Drehmitnehmer des alten Zwischenelements greifen in die zweiten Längsnuten des neuen Einsteckendes ein. Das neue Einsteckende ist für leistungsstarke Bohrgeräte ausgelegt und für größere Kräfte und Drehmomente zugelassen als die alte Werkzeugaufnahme, was im Betrieb unkritisch ist. Ein Einsteckende mit Leistungen bzw. Drehmomenten zu betreiben, die kleiner sind als der zugelassene Höchstwert, kann sich positiv auf die Lebensdauer des Einsteckendes auswirken.

Besonders bevorzugt sind die erste Breite der ersten inneren Drehmitnehmer und die zweite Breite der zweiten inneren Drehmitnehmer gleich. Die gleiche Tiefe und gleiche Breite der ersten und zweiten inneren Drehmitnehmer hat den Vorteil, dass keine Zuordnung der ersten inneren Drehmitnehmer zu den ersten Längsnuten bzw. der zweiten inneren Drehmitnehmer zu den zweiten Längsnuten erforderlich ist. Jeder innere Drehmitnehmer kann in jede Längsnut eingeführt werden.

In einer bevorzugten Ausführung weisen die äußeren Drehmitnehmer des Zwischenelements erste äußere Drehmitnehmer mit einer dritten Breite und dritten Tiefe und zweite äußere Drehmitnehmer mit einer vierten Breite und vierten Tiefe auf und die äußeren Drehmitnahmenuten im Ringbund des Grundkörpers weisen erste äußere Drehmitnahmenuten und zweite äußere Drehmitnahmenuten auf, wobei im verbundenen Zustand des Grundkörpers und des Zwischenelements die ersten äußeren Drehmitnehmer in die ersten äußeren Drehmitnahmenuten und die zweiten äußeren Drehmitnehmer in die zweiten äußeren Drehmitnahmenuten eingreifen. Die zweiten äußeren Drehmitnehmer vergrößern die Kontaktfläche zwischen dem Grundkörper und dem Zwischenelement und ermöglichen dadurch die Übertragung größerer Kräfte und Drehmomente. Je grösser die Kontaktfläche ist, umso geringer ist die Flächenpressung zwischen dem Grundkörper und dem Zwischenelement oder bei gleichbleibender Flächenpressung können über die größere Kontaktfläche größere Kräfte und Drehmomente übertragen werden.

In einer bevorzugten Ausführung weisen die unteren Drehmitnehmer erste untere Drehmitnehmer mit einer fünften Breite und fünften Tiefe und zweite untere Drehmitnehmer mit einer sechsten Breite und sechsten Tiefe auf und die unteren Drehmitnahmenuten weisen erste untere Drehmitnahmenuten und zweite untere Drehmitnahmenuten auf, wobei im verbundenen Zustand des Grundkörpers und des Zwischenelements die ersten unteren Drehmitnehmer in die ersten unteren Drehmitnahmenuten und die zweiten unteren Drehmitnehmer in die zweiten unteren Drehmitnahmenuten eingreifen. Die Ausbildung der ersten und zweiten unteren Drehmitnehmer und ihre Anordnung an der Grundfläche des Zwischenelements hat den Vorteil, dass die Kontaktfläche zwischen dem Grundkörper und dem Zwischenelement vergrößert wird ohne die Höhe des Drehmitnahmebereichs zu vergrößern und außerdem die Belastung des Zwischenelements in andere Bereiche verschoben wird.

Bevorzugt fluchten in einer Ebene senkrecht zur Längsachse der Werkzeugaufnahme die ersten unteren Drehmitnehmer mit den ersten inneren Drehmitnehmern und die zweiten unteren Drehmitnehmer mit den zweiten inneren Drehmitnehmern. Dadurch, dass die ersten und zweiten unteren Drehmitnehmer mit den ersten und zweiten inneren Drehmitnehmern fluchten, erfolgt die Kraft- und Drehmomentübertragung auf kürzestem Weg von der Werkzeugaufnahme auf das Einsteckende.

Besonders bevorzugt sind die fünfte Tiefe der ersten unteren Drehmitnehmer und die sechste Tiefe der zweiten unteren Drehmitnehmer gleich. Die gleiche Tiefe der ersten und zweiten unteren Drehmitnehmer hat den Vorteil, dass die Kraft bzw. das Drehmoment gleichmäßig über die ersten und zweiten unteren Drehmitnehmer vom Grundkörper auf das Zwischenelement übertragen wird.

Besonders bevorzugt sind die fünfte Breite der ersten unteren Drehmitnehmer und die sechste Breite der zweiten unteren Drehmitnehmer gleich. Die gleiche Tiefe und gleiche Breite der ersten und zweiten unteren Drehmitnehmer hat den Vorteil, dass die Kraft bzw. das Drehmoment gleichmäßig über die ersten und zweiten unteren Drehmitnehmer vom Grundkörper auf das Zwischenelement übertragen werden kann. Außerdem ist keine Zuordnung der ersten unteren Drehmitnehmer zu den ersten unteren Drehmitnahmenuten bzw. der zweiten unteren Drehmitnehmer zu den zweiten unteren Drehmitnahmenuten erforderlich.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt.

Der Einfachheit halber sind nachfolgend für identische oder ähnliche Teile oder Teile mit identischer oder ähnlicher Funktion gleiche Bezugszeichen verwendet.

### Es zeigen:

- FIG. 1: eine erfindungsgemäße Vorrichtung zur Drehmomentübertragung von einem Bohrgerät auf eine Bohrkrone bestehend aus einer Werkzeugaufnahme, die mit dem Bohrgerät verbunden ist, und einem Einsteckende, das mit der Bohrkrone verbunden ist;
- FIGN. 2A, B: die Werkzeugaufnahme (FIG. 2A) und das Einsteckende (FIG. 2B) der in FIG. 1 dargestellten erfindungsgemäßen Vorrichtung zur Drehmomentübertragung;
- FIGN. 3A, B: das Einsteckende der erfindungsgemäßen Vorrichtung zur Drehmomentübertragung in einer Seitenansicht (FIG. 3A) und in einem Längsschnitt entlang der Schnittebene A-A in FIG. 3A (FIG. 3B);
- FIGN. 4A, B: die erfindungsgemäße Vorrichtung zur Drehmomentübertragung der FIG. 1 im verbundenen Zustand, in dem das Einsteckende der FIG. 2B mit der Werkzeugaufnahme der FIG. 2A verbunden ist, in einer Seitenansicht (FIG. 4A) und in einem Längsschnitt entlang der Schnittebene A-A in FIG. 4A (FIG. 4B);
- FIGN. 5A-C: einen Grundkörper der Werkzeugaufnahme in einer Seitenansicht (FIG. 5A), in einem Längsschnitt entlang der Schnittebene A-A in FIG. 5A (FIG. 5B) und in einer Draufsicht auf die Schnittstelle zu einem Zwischenelement der Werkzeugaufnahme (FIG. 5C); und
- FIGN. 6A-C: ein Zwischenelement der Werkzeugaufnahme in einer Seitenansicht (FIG. 6A), in einem Längsschnitt entlang der Schnittebene A-A in FIG. 6A (FIG. 6B) und in einer Draufsicht auf die Schnittstelle zum Grundkörper (FIG. 6C).

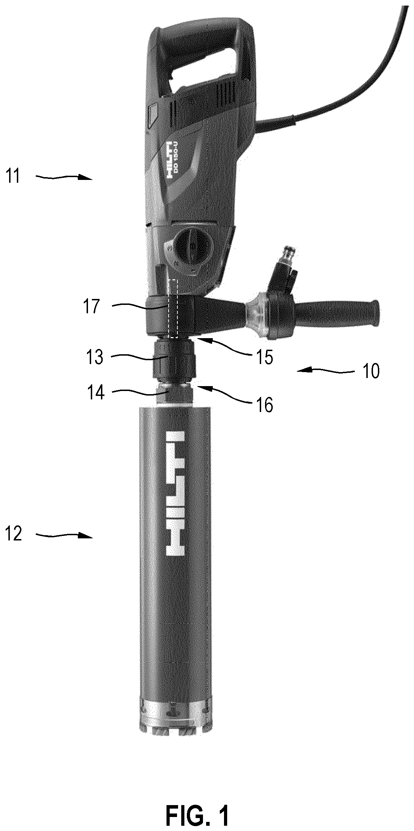

**FIG. 1** zeigt eine erfindungsgemäße Vorrichtung **10** zur Übertragung eines Drehmomentes von einem Bohrgerät **11** auf eine Bohrkrone **12.** Die Vorrichtung 10 ist zwischen dem Bohrgerät 11 und der Bohrkrone 12 angeordnet und überträgt das Drehmoment vom Bohrgerät 11 auf die Bohrkrone 12.

Die Vorrichtung 10 ist aus einer Werkzeugaufnahme **13,** die mit dem Bohrgerät 11 verbunden ist, und einem Einsteckende **14,** das mit der Bohrkrone 12 verbunden ist, aufgebaut. Die Vorrichtung 10 ist über eine erste Verbindung **15** mit dem Bohrgerät 11 und über eine zweite Verbindung **16** mit der Bohrkrone 12 verbunden. Im verbundenen Zustand der Vorrichtung 10 erfolgt die Drehmomentübertragung über folgende Komponenten: Antriebswelle **17** des Bohrgerätes 11, Werkzeugaufnahme 13, Einsteckende 14 und Bohrkrone 12. Der verbundene Zustand der Vorrichtung 10 ist definiert als Zustand, in dem die Werkzeugaufnahme 13 und das Einsteckende 14 verbunden sind.

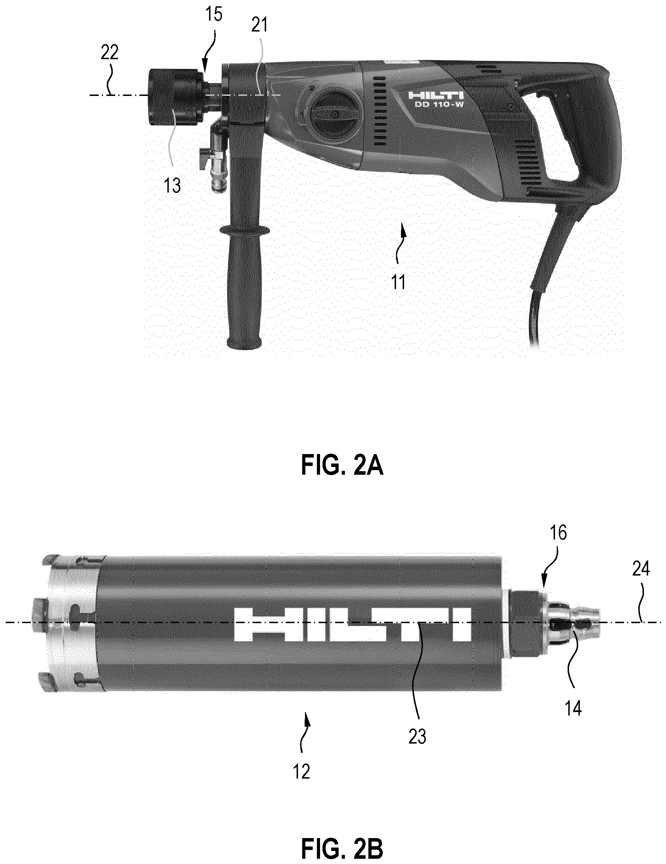

**FIGN. 2A****, B** zeigen das Bohrgerät 11 mit der Werkzeugaufnahme 13 (FIG. 2A) und die Bohrkrone 12 mit dem Einsteckende 14 (FIG. 2B) der erfindungsgemäßen Vorrichtung 10. Die Werkzeugaufnahme 13 und das Einsteckende 14 bilden im verbundenen Zustand die erfindungsgemäße Vorrichtung 10 der FIG. 1.

Die Werkzeugaufnahme 13 ist mit dem Bohrgerät 11 über die erste Verbindung 15 verbunden, die im Ausführungsbeispiel als lösbare Verbindung ausgebildet ist; alternativ kann die Werkzeugaufnahme 13 über eine unlösbare erste Verbindung 15 mit dem Bohrgerät 11 verbunden sein. Da es sich bei der Werkzeugaufnahme 13 um ein Verschleißteil handelt, macht es Sinn, die Werkzeugaufnahme 13 als separate Komponente auszubilden und über eine lösbare erste Verbindung mit der Antriebswelle 17 des Bohrgerätes 11 zu verbinden. Um sicherzustellen, dass das Bohrgerät 11 nur mit einer zugelassenen Werkzeugaufnahme 13 betrieben wird, ist es sinnvoll, die erste Verbindung 15 so auszubilden, dass sie nur mit einem Spezialwerkzeug betätigt werden kann.

Das Einsteckende 14 ist mit der Bohrkrone 12 über die zweite Verbindung 16 verbunden, die im Ausführungsbeispiel als lösbare Verbindung ausgebildet ist. Dazu weist die Bohrkrone 12 ein Innengewinde auf, das mit einem Außengewinde des Einsteckendes 14 verbunden wird. Die lösbare zweite Verbindung 16 ist beispielsweise als metrische ISO-Gewindeverbindung oder sonstige lösbare Verbindung ausgebildet. Anstelle der lösbaren zweiten Verbindung 16 kann das Einsteckende 14 unlösbar mit der Bohrkrone 12 verbunden sein; dazu kann das Einsteckende 14 mit der Bohrkrone 12 beispielsweise durch Schweißen oder sonstige Verfahren unlösbar verbunden werden.

Die Antriebswelle 17 ist um eine erste Drehachse **21** drehbar ausgebildet, die im verbundenen Zustand der Werkzeugaufnahme 13 und des Bohrgerätes 11 mit einer Längsachse **22** der Werkzeugaufnahme 13 zusammenfällt. Die Bohrkrone 12 ist im Betrieb um eine zweite Drehachse **23** drehbar ausgebildet, die im verbundenen Zustand des Einsteckendes 14 und der Bohrkrone 12 mit einer Längsachse **24** des Einsteckendes 14 zusammenfällt. Zur Unterscheidung wird die Längsachse 22 der Werkzeugaufnahme 13 als erste Längsachse 22 und die Längsachse 24 des Einsteckendes 14 als zweite Längsachse 24 bezeichnet. Im verbundenen Zustand des Bohrgerätes 11 und der Bohrkrone 12 sind die erste Längsachse 22 und zweite Längsachse 24 koaxial zueinander angeordnet.

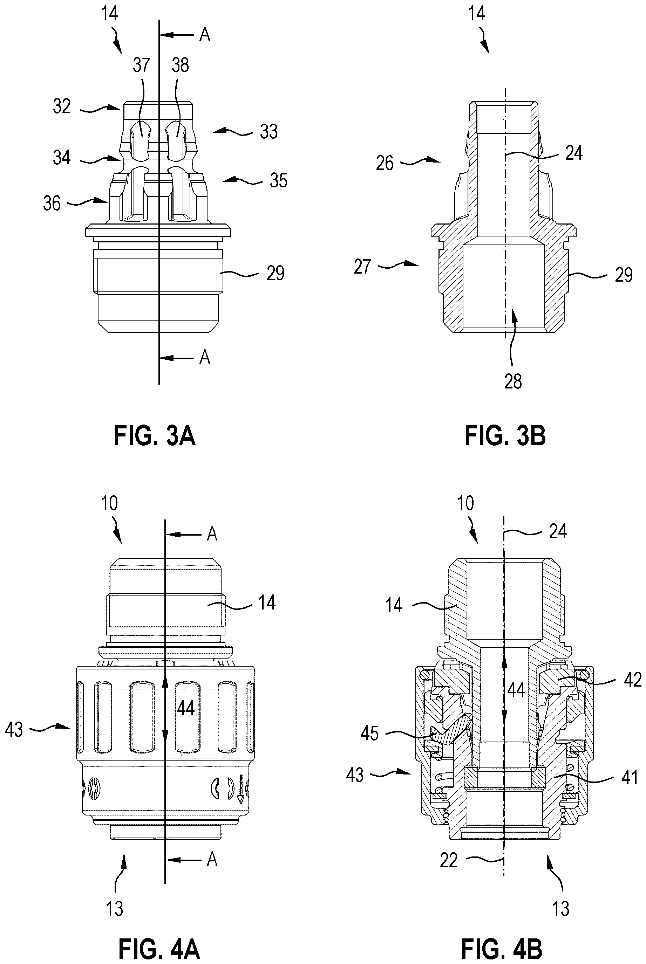

**FIGN. 3A****, B** zeigen das Einsteckende 14 der erfindungsgemäßen Vorrichtung 10 zur Drehmomentübertragung im nicht-verbundenen Zustand der Vorrichtung 10 in einer Seitenansicht (FIG. 3A) und in einem Längsschnitt entlang der Schnittebene A-A in FIG. 3A (FIG. 3B). Das Einsteckende 14 ist aus einem ersten Abschnitt **26** und einem zweiten Abschnitt **27** aufgebaut, die im Ausführungsbeispiel einteilig ausgebildet sind und eine zentrale Durchgangsbohrung **28** aufweisen.

Der zweite Abschnitt 27 des Einsteckendes 14 weist ein Außengewinde **29** auf, das mit einem passenden Innengewinde der Bohrkrone 12 die zweite Gewindeverbindung 16 bildet. Der erste Abschnitt 26 des Einsteckendes 14 ist aus fünf Abschnitten zusammengesetzt und umfasst einen Stirnbereich **32,** einen ersten Außenkonusbereich **33,** einen Nutbereich **34,** einen zweiten Außenkonusbereich **35** und einen Zylinderbereich **36.** Der erste und zweite Außenkonusbereich 33, 35 weisen eine erste bzw. zweite konische Außenfläche auf, die sich in Richtung der Bohrkrone 12 erweitert. Die konischen Außenflächen werden beispielsweise durch Drehen hergestellt; durch Fertigung der ersten und zweiten konischen Außenfläche in einer Aufspannung kann eine hohe Fertigungsgenauigkeit erzielt werden.

Das Einsteckende 14 weist erste Längsnuten **37** und zweite Längsnuten **38** auf, die sich parallel zur zweiten Längsachse 24 des Einsteckendes 14 erstrecken und auf der Außenseite des ersten Abschnittes 26 angeordnet sind. Die ersten und zweiten Längsnuten 37, 38 sind identisch ausgebildet und erstrecken sich über den ersten Außenkonusbereich 33, den Nutbereich 34 und den zweiten Außenkonusbereich 35 sowie über den Zylinderbereich 36. Die ersten und zweiten Längsnuten 37, 38 sind in Umfangsrichtung **39** des Einsteckendes 14 gleichmäßig verteilt und abwechselnd angeordnet, wobei jede erste Längsnut 37 zwischen zwei zweiten Längsnuten 38 angeordnet ist. Im Ausführungsbeispiel weist das Einsteckende 14 drei erste Längsnuten 37 und drei zweite Längsnuten 38 auf.

**FIGN. 4A****, B** zeigen die erfindungsgemäße Vorrichtung 10 zur Drehmomentübertragung im verbundenen Zustand, in dem das Einsteckende 14 mit der Werkzeugaufnahme 13 verbunden ist, in einer Seitenansicht (FIG. 4A) und in einem Längsschnitt entlang der Schnittebene A-A in FIG. 4A (FIG. 4B).

Die Werkzeugaufnahme 13 ist aus einem Grundkörper **41,** einem Zwischenelement **42** und einer Verriegelungseinrichtung **43** aufgebaut. Dabei bildet das Zwischenelement 42 die Schnittstelle zwischen der Werkzeugaufnahme 13 und dem Einsteckende 14 und das Drehmoment wird vom Zwischenelement 42 auf das Einsteckende 14 übertragen. Der verbundene Zustand der Werkzeugaufnahme 13 ist definiert als Zustand, in dem der Grundkörper 41, das Zwischenelement 42 und die Verriegelungseinrichtung 43 verbunden sind.

Die Verriegelungseinrichtung 43 ist relativ zum Grundkörper 41 verstellbar ausgebildet, wobei die Verriegelungseinrichtung 43 in einer Längsrichtung **44,** die parallel zur ersten Längsachse 22 der Werkzeugaufnahme 13 verläuft, verschiebbar und um die erste Längsachse 22 drehbar ist. Die Verriegelungseinrichtung 43 ist zwischen mehreren Stellungen verstellbar, die als Grundstellung, Aufnahmestellung und Verriegelungsstellung bezeichnet werden. Um das Einsteckende 14 formschlüssig mit der Werkzeugaufnahme 13 verbinden zu können, wird die Verriegelungseinrichtung 43 aus der Grundstellung in Längsrichtung 44 in die Aufnahmestellung verschoben. In der Aufnahmestellung wird das Einsteckende 14 in die Werkzeugaufnahme 13 eingeführt. Zum Verriegeln der Vorrichtung 10 wird die Verriegelungseinrichtung 43 um die erste Längsachse 22 in die Verriegelungsstellung gedreht. Dabei greifen Verriegelungselemente **45** in den Nutbereich 34 des Einsteckendes 14 ein und verriegeln das Einsteckende 14 mit der Werkzeugaufnahme 13. Die Grundstellung der Verriegelungseinrichtung 43 ist optional und kann entfallen, notwendig sind die Aufnahmestellung und Verriegelungsstellung der Verriegelungseinrichtung 43.

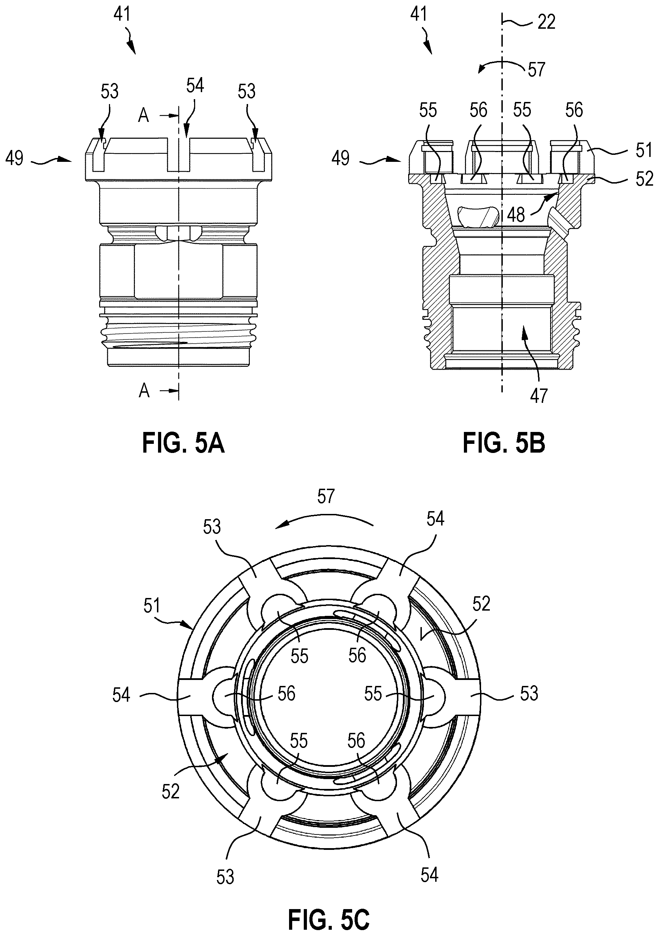

FIGN. 5A-C zeigen den Grundkörper 41 der Werkzeugaufnahme 13 in einer Seitenansicht (FIG. 5A), in einem Längsschnitt entlang der Schnittebene A-A in FIG. 5A (FIG. 5B) und in einer Draufsicht auf die Schnittstelle zum Zwischenelement 42 (FIG. 5C).

Der Grundkörper 41 ist hülsenförmig mit einer zentralen Durchgangsbohrung **47** ausgebildet und aus mehreren Abschnitten zusammengesetzt, die im Ausführungsbeispiel einteilig ausgebildet sind. Neben dem Innengewinde umfasst der Grundkörper 41 einen Innenkonusbereich **48,** der mit dem Einsteckende 14 zusammenwirkt, und einen Drehmitnahmebereich **49,** der mit dem Zwischenelement 42 zusammenwirkt. Der Innenkonusbereich 48 weist eine konische Innenfläche auf, die sich in Richtung des Bohrgerätes erweitert. Im verbundenen Zustand der Vorrichtung 10 bilden der Innenkonusbereich 48 des Grundkörpers 41 und der erste und zweite Außenkonusbereich 33, 35 des Einsteckendes 14 einen Formschluss.

Der Drehmitnahmebereich 49 ist stufenförmig aus einem Ringbund **51** und einer Ringschulter **52** ausgebildet. Im Ringbund 51 sind erste äußere Drehmitnahmenuten **53** und zweite äu-ßere Drehmitnahmenuten **54** vorgesehen, die im verbundenen Zustand der Werkzeugaufnahme 13 mit ersten und zweiten äußeren Drehmitnehmern des Zwischenelements 42 zusammenwirken, und in der Ringschulter 51 sind erste untere Drehmitnahmenuten **55** und zweite untere Drehmitnahmenuten **56** vorgesehen, die im verbundenen Zustand der Vorrichtung 10 mit ersten und zweiten unteren Drehmitnehmern des Zwischenelements 42 zusammenwirken. Die ersten und zweiten äußeren Drehmitnahmenuten 53, 54 werden unter dem Begriff "äußere Drehmitnahmenuten" und die ersten und zweiten unteren Drehmitnahmenuten 55, 56 unter dem Begriff "untere Drehmitnahmenuten" zusammengefasst.

Die ersten und zweiten äußeren Drehmitnahmenuten 54, 55 sind in einer Umfangsrichtung **57** des Grundkörpers 41 im Ringbund 51 des Drehmitnahmebereichs 49 gleichmäßig verteilt und abwechselnd angeordnet, wobei jede erste äußere Drehmitnahmenut 55 zwischen zwei zweiten äußeren Drehmitnahmenuten 56 angeordnet ist. Die ersten und zweiten unteren Drehmitnahmenuten 56, 57 sind in Umfangsrichtung 57 des Grundkörpers 41 gleichmäßig in der Ringschulter 52 verteilt und abwechselnd angeordnet, wobei jede erste untere Drehmitnahmenut 55 zwischen zwei zweiten unteren Drehmitnahmenuten 56 angeordnet ist.

Im Ausführungsbeispiel weist der Ringbund 51 drei erste äußere Drehmitnahmenuten 53 und drei zweite äußere Drehmitnahmenuten 54 auf und die Ringschulter 52 weist drei erste untere Drehmitnahmenuten 55 und drei zweite untere Drehmitnahmenuten 56 auf.

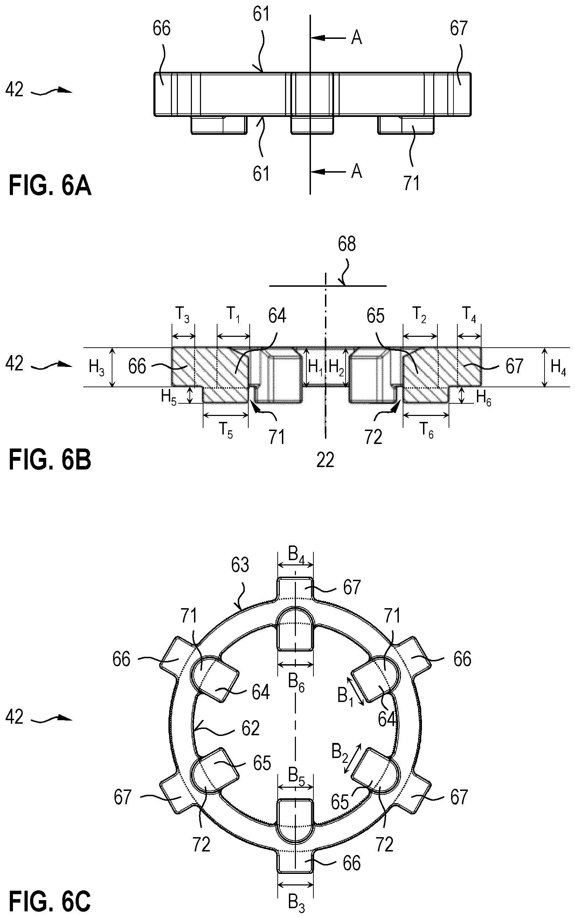

**FIGN. 6A-C** zeigen das Zwischenelement 42 der Werkzeugaufnahme 13 in einer Seitenansicht (FIG. 6A), in einem Längsschnitt entlang der Schnittebene A-A in FIG. 6A (FIG. 6B) und in einer Draufsicht auf die Schnittstelle zum Grundkörper 41 (FIG. 6C). Das Zwischenelement 42 ist im verbundenen Zustand der Vorrichtung 10 zwischen dem Grundkörper 41 und dem Einsteckende 14 angeordnet und das Drehmoment wird vom Grundkörper 41 über das Zwischenelement 42 auf das Einsteckende 14 übertragen.

Das Zwischenelement 42 ist ringförmig mit einer Grundfläche **61,** einer inneren Mantelfläche **62** und einer äußeren Mantelfläche **63** ausgebildet. Dabei bildet die innere Mantelfläche 62 einen inneren Mitnehmerbereich und die äußere Mantelfläche 63 einen äußeren Mitnehmerbereich. An der inneren Mantelfläche 62 weist das Zwischenelement 42 erste innere Drehmitnehmer **64** und zweite innere Drehmitnehmer **65** auf, die im verbundenen Zustand der Vorrichtung 10 in die ersten Längsnuten 37 bzw. zweiten Längsnuten 38 des Einsteckendes 14 eingreifen. An der äußeren Mantelfläche 63 weist das Zwischenelement 42 erste äußere Drehmitnehmer **66** und zweite äußere Drehmitnehmer **67** auf, die im verbundenen Zustand der Werkzeugaufnahme 13 in die ersten äußeren Drehmitnahmenuten 53 bzw. zweiten äu-ßeren Drehmitnahmenuten 54 am Ringbund 51 des Grundkörpers 41 eingreifen.

Die ersten inneren Drehmitnehmer 64 und zweiten inneren Drehmitnehmer 65 werden unter dem Begriff "innere Drehmitnehmer" zusammengefasst. Senkrecht zur ersten Längsachse 22 der Werkzeugaufnahme 13 weisen die ersten inneren Drehmitnehmer 64 eine erste Breite **B₁** und erste Tiefe **T₁** und die zweiten inneren Drehmitnehmer 65 eine zweite Breite **B₂** und zweite Tiefe **T₂** auf. Parallel zur ersten Längsachse 22 der Werkzeugaufnahme 13 erstrecken sich die ersten inneren Drehmitnehmer 64 über eine erste Höhe **H₁** und die zweiten inneren Drehmitnehmer 65 über eine zweite Höhe **H₂.** Um die Flächenpressung zwischen dem Zwischenelement 42 und dem Einsteckende 14 so klein wie möglich einzustellen, sind die erste und zweite Höhe H₁, H₂ so groß wie möglich.

Die ersten und zweiten äußeren Drehmitnehmer 66, 67 werden unter dem Begriff "äußere Drehmitnehmer" zusammengefasst. Senkrecht zur ersten Längsachse 22 der Werkzeugaufnahme 13 weisen die ersten äußeren Drehmitnehmer 66 eine dritte Breite **B₃** und dritte Tiefe **T₃** und die zweiten äußeren Drehmitnehmer 67 eine vierte Breite **B₄** und vierte Tiefe **T₄** auf. Parallel zur ersten Längsachse 22 der Werkzeugaufnahme 13 weisen die ersten äußeren Drehmitnehmer 66 eine dritte Höhe **H₃** und die zweiten äußeren Drehmitnehmer 67 eine vierte Höhe **H₄** auf. Um die Flächenpressung zwischen dem Grundkörper 41 und dem Zwischenelement 42 so klein wie möglich einzustellen, sind die dritte und vierte Höhe H₃, H₄ so groß wie möglich.

Die ersten äußeren Drehmitnehmer 66 und zweiten äußeren Drehmitnehmer 67 fluchten in einer Ebene **68** senkrecht zur ersten Längsachse 22 der Werkzeugaufnahme 13 mit den ersten inneren Drehmitnehmern 64 bzw. zweiten inneren Drehmitnehmern 65. Diese Anordnung hat den Vorteil, dass die Kräfte auf direktem Weg vom Grundkörper 41 auf das Einsteckende 14 übertragen werden. Im verbundenen Zustand der Vorrichtung 10 erfolgt der Kraftfluss auf die ersten und zweiten äußeren Drehmitnehmer 66, 67 an der äußeren Mantelfläche 63 des Zwischenelements 42, die Kräfte werden über das Zwischenelement 42 auf die ersten und zweiten inneren Drehmitnehmer 64, 65 an der inneren Mantelfläche 62 des Zwischenelements 42 übertragen, wobei die ersten inneren Drehmitnehmer 64 die Kräfte auf die ersten Längsnuten 37 und die zweiten inneren Drehmitnehmer 65 die Kräfte auf die zweiten Längsnuten 38 übertragen.

Das Zwischenelement 42 weist neben den inneren Drehmitnehmern 64, 65 und äußeren Drehmitnehmern 66, 67 erste untere Drehmitnehmer **71** und zweite untere Drehmitnehmer **72** auf, die an der Grundfläche 61 des Zwischenelements 42 angeordnet sind und die in die ersten und zweiten inneren Drehmitnehmer 64, 65 übergehen. Dabei gehen die ersten unteren Drehmitnehmer 71 in die ersten inneren Drehmitnehmer 64 über und die zweiten unteren Drehmitnehmer 72 gehen in die zweiten inneren Drehmitnehmer 65 über.

Die ersten und zweiten unteren Drehmitnehmer 71, 72 werden unter dem Begriff "untere Drehmitnehmer" zusammengefasst. Senkrecht zur ersten Längsachse 22 der Werkzeugaufnahme 13 weisen die ersten unteren Drehmitnehmer 71 eine fünfte Breite **B₅** und fünfte Tiefe **T₅** und die zweiten unteren Drehmitnehmer 72 eine sechste Breite **B₆** und sechste Tiefe **T₆** auf. Parallel zur ersten Längsachse 22 der Werkzeugaufnahme 13 weisen die ersten unteren Drehmitnehmer 71 eine fünfte Höhe **H₅** und die zweiten unteren Drehmitnehmer 72 eine sechste Höhe **H₆** auf. Um die Flächenpressung zwischen dem Grundkörper 41 und dem Zwischenelement 42 so klein wie möglich einzustellen, sind die fünfte und sechste Höhe H₅, H₆ so groß wie möglich.

Das im Ausführungsbeispiel dargestellte Zwischenelement 42 weist sämtliche Drehmitnehmer auf, die als erste und zweite innere Drehmitnehmer 64, 65, als erste und zweite äußere Drehmitnehmer 66, 67 und als erste und zweite untere Drehmitnehmer 71, 72 ausgebildet sind. Die zweiten äußeren Drehmitnehmer 67 sind optional. Durch die zweiten äußeren Drehmitnehmer 67 wird die Kontaktfläche zwischen dem Grundkörper 41 und dem Zwischenelement 42 vergrößert.

Die neue Werkzeugaufnahme 13 unterscheidet sich durch die unteren Drehmitnehmer 71, 72 und unteren Drehmitnahmenuten 55, 56 von der alten Werkzeugaufnahme. Die Ausbildung der ersten und zweiten unteren Drehmitnehmer 71, 72 und ihre Anordnung an der Grundfläche 61 des Zwischenelements 42 hat den Vorteil, dass die Kontaktfläche zwischen dem Grundkörper 41 und dem Zwischenelement 42 vergrößert wird, ohne die Höhe des Drehmitnahmebereichs 49 zu vergrößern. Außerdem wird die Belastung des Zwischenelements 42 in andere Bereiche verschoben. Der Kraftfluss, der bei der Kraftübertragung von den ersten und zweiten äußeren Drehmitnehmern 66, 67 auf die ersten und zweiten inneren Drehmitnehmer 64, 65 entsteht, verläuft überwiegend in der Ebene 68 senkrecht zur ersten Längsachse 22 der Werkzeugaufnahme 13 und der Kraftfluss, der bei der Kraftübertragung von den ersten und zweiten unteren Drehmitnehmern 71, 72 auf die ersten und zweiten inneren Drehmitnehmer 64, 65 entsteht, verläuft überwiegend parallel zur ersten Längsachse 22 der Werkzeugaufnahme 13. Die Belastungen auf das Zwischenelement 42 werden besser verteilt, was zu einer längeren Lebensdauer des Zwischenelements 42 führt.

Im Ausführungsbeispiel der Vorrichtung 10 ist die fünfte Tiefe T₅ der ersten unteren Drehmitnehmer 71 gleich der sechsten Tiefe T₆ der zweiten unteren Drehmitnehmer 72. Die gleiche Tiefe (T₅ = T₆) der ersten und zweiten unteren Drehmitnehmer 71, 72 hat den Vorteil, dass die Kraft bzw. das Drehmoment gleichmäßig über die ersten und zweiten unteren Drehmitnehmer 71, 72 vom Grundkörper 41 auf das Zwischenelement 42 übertragen wird. Außerdem ist im Ausführungsbeispiel der Vorrichtung 10 die fünfte Breite B₅ der ersten unteren Drehmitnehmer 71 gleich der sechsten Breite B₆ der zweiten unteren Drehmitnehmer 72. Die gleiche Tiefe (T₅ = T₆) und gleiche Breite (B₅ = B₆) der ersten und zweiten unteren Drehmitnehmer 71, 72 hat den Vorteil, dass die Kraft bzw. das Drehmoment gleichmäßig über die ersten und zweiten unteren Drehmitnehmer 71, 72 vom Grundkörper 41 auf das Zwischenelement 42 übertragen werden kann und außerdem keine Zuordnung der ersten unteren Drehmitnehmer 71 zu den ersten unteren Drehmitnahmenuten 55 bzw. der zweiten unteren Drehmitnehmer 72 zu den zweiten unteren Drehmitnahmenuten 56 erforderlich ist.

Bei der im Ausführungsbeispiel dargestellten neuen Werkzeugaufnahme 13 ist die erste Tiefe T₁ der ersten inneren Drehmitnehmer 64 gleich der zweiten Tiefe T₂ der zweiten inneren Drehmitnehmer 65. Bei der alten Werkzeugaufnahme ist die zweite Tiefe der zweiten inneren Drehmitnehmer kleiner als die erste Tiefe der ersten inneren Drehmitnehmer. Die größere zweite Tiefe der zweiten inneren Drehmitnehmer vergrößert die Kontaktfläche der neuen Werkzeugaufnahme zum neuen Einsteckende und ermöglicht die Übertragung größerer Kräfte und Drehmomente vom Bohrgerät auf die Bohrkrone. Die gleiche Tiefe (T₁ = T₂) der ersten und zweiten inneren Drehmitnehmer 64, 65 hat außerdem den Vorteil, dass die neue Werkzeugaufnahme nicht mit dem alten Einsteckende kombiniert werden kann, da die Abmessungen der zweiten Längsnuten 38 in der Ebene senkrecht zur zweiten Längsachse 24 des Einsteckendes 14 zu klein sind, um sie mit den zweiten inneren Drehmitnehmern 65 zu kombinieren.

Im Ausführungsbeispiel der Vorrichtung 10 ist die erste Breite B₁ der ersten inneren Drehmitnehmer 64 gleich der zweiten Breite B₂ der zweiten inneren Drehmitnehmer 65. Bei der alten Werkzeugaufnahme ist die zweite Breite der zweiten inneren Drehmitnehmer kleiner als bei der neuen Werkzeugaufnahme. Die gleiche Tiefe (T₁ = T₂) und gleiche Breite (B₁ = B₂) der ersten und zweiten inneren Drehmitnehmer 64, 65 hat den Vorteil, dass keine Zuordnung der ersten inneren Drehmitnehmer 64 zu den ersten Längsnuten 37 bzw. der zweiten inneren Drehmitnehmer 65 zu den zweiten Längsnuten 38 erforderlich ist.

Die im Ausführungsbeispiel dargestellte neue Werkzeugaufnahme 13 unterscheidet sich durch die zweiten äußeren Drehmitnehmer 67 und zweiten äußeren Drehmitnahmenuten 54 von der alten Werkzeugaufnahme. Im verbundenen Zustand der Vorrichtung 10 greifen die zweiten äußeren Drehmitnehmer 67 in die zweiten äußeren Drehmitnahmenuten 54 des Grundkörpers 41 ein. Die zweiten äußeren Drehmitnehmer 67 und Drehmitnahmenuten 54 vergrößern die Kontaktfläche zwischen dem Grundkörper 41 und dem Zwischenelement 42 und ermöglichen dadurch die Übertragung größerer Kräfte und Drehmomente. Je grösser die Kontaktfläche ist, umso geringer ist die Flächenpressung zwischen dem Grundkörper 41 und dem Zwischenelement 42 oder bei gleichbleibender Flächenpressung können über die grö-ßere Kontaktfläche größere Kräfte und Drehmomente übertragen werden.

Im Ausführungsbeispiel der Vorrichtung 10 ist die dritte Tiefe T₃ der ersten äußeren Drehmitnehmer 66 gleich der vierten Tiefe T₄ der zweiten äußeren Drehmitnehmer 67. Die gleiche Tiefe (T₃ = T₄) der ersten und zweiten äußeren Drehmitnehmer 66, 67 hat den Vorteil, dass die Kraft bzw. das Drehmoment gleichmäßig über die ersten und zweiten äußeren Drehmitnehmer 66, 67 vom Grundkörper 41 auf das Zwischenelement 42 übertragen wird. Außerdem ist im Ausführungsbeispiel der Vorrichtung 10 die dritte Breite der ersten äußeren Drehmitnehmer 66 und die vierte Breite der zweiten äußeren Drehmitnehmer 67 gleich. Die gleiche Tiefe (T₃ = T₄) und gleiche Breite (B₃ = B₄) der ersten und zweiten äußeren Drehmitnehmer 66, 67 hat den Vorteil, dass keine Zuordnung der ersten äußeren Drehmitnehmer 66 zu den ersten äußeren Drehmitnahmenuten 53 bzw. der zweiten äußeren Drehmitnehmer 67 zu den zweiten äußeren Drehmitnahmenuten 54 erforderlich ist. Jeder äußere Drehmitnehmer kann in jede äußere Drehmitnahmenut eingeführt werden.

## Patentansprüche

1. Vorrichtung (10) zur Übertragung eines Drehmomentes, das von einem Bohrgerät (11) erzeugt wird, auf eine Bohrkrone (12), aufweisend:
▪ ein Einsteckende (14), das einen ersten Außenkonusbereich (33), einen Nutbereich (34) und einen zweiten Außenkonusbereich (35) sowie Längsnuten (37, 38), die sich parallel zu einer Längsachse (24) des Einsteckendes (14) erstrecken, aufweist, und
▪ eine Werkzeugaufnahme (13), die einen Grundkörper (41), ein Zwischenelement (42) und eine Verriegelungseinrichtung (43) aufweist, wobei
- das Zwischenelement (42) ringförmig ausgebildet ist mit einer inneren Mantelfläche (62), an der innere Drehmitnehmer (64, 65) angeordnet sind, einer äußeren Mantelfläche (63), an der äußere Drehmitnehmer (66, 67) angeordnet sind, und einer Grundfläche (61), die die innere Mantelfläche (62) und äußere Mantelfläche (63) verbindet,
- der Grundkörper (41) einen Innenkonusbereich (48) und einen Drehmitnahmebereich (49) mit einem Ringbund (51) und einer Ringschulter (52) aufweist, wobei im Ringbund (51) äußere Drehmitnahmenuten (53, 54) angeordnet sind, und
- die Verriegelungseinrichtung (43) parallel zu einer Längsachse (22) der Werkzeugaufnahme (13) zwischen einer Aufnahmestellung und einer Verriegelungsstellung verstellbar ist, wobei das Einsteckende (14) in der Aufnahmestellung in die Werkzeugaufnahme (13) einführbar ist und in der Verriegelungsstellung mit der Werkzeugaufnahme (13) verbunden ist,
wobei im verbundenen Zustand der Vorrichtung (10) die inneren Drehmitnehmer (64, 65) des Zwischenelements (42) in die Längsnuten (37, 38) des Einsteckendes (14) eingreifen und die äußeren Drehmitnehmer (66, 67) des Zwischenelements (42) in die äußeren Drehmitnahmenuten (53, 54) des Ringbundes (51) eingreifen,
**dadurch gekennzeichnet, dass** an der Grundfläche (61) des Zwischenelements (42) untere Drehmitnehmer (71, 72) und in der Ringschulter (52) untere Drehmitnahmenuten (55, 56) angeordnet sind, wobei im verbundenen Zustand des Grundkörpers (41) und des Zwischenelements (42) die unteren Drehmitnehmer (71, 72) mit den unteren Drehmitnahmenuten (55, 56) zusammenwirken.

2. Vorrichtung nach Anspruch 1, **dadurch gekennzeichnet, dass** die unteren Drehmitnehmer (71, 72) in einer Ebene (68) senkrecht zur Längsachse (22) der Werkzeugaufnahme (13) mit den inneren Drehmitnehmern (64, 65) fluchten.

3. Vorrichtung nach einem der Ansprüche 1 bis 2, **dadurch gekennzeichnet, dass** die unteren Drehmitnehmer (71, 72) in einer Ebene (68) senkrecht zur Längsachse (22) der Werkzeugaufnahme (13) mit den äußeren Drehmitnehmern (66, 67) fluchten.

4. Vorrichtung nach einem der Ansprüche 1 bis 3, **dadurch gekennzeichnet, dass** die inneren Drehmitnehmer (64, 65) des Zwischenelements (42) erste innere Drehmitnehmer (64) mit einer ersten Breite (B₁) und ersten Tiefe (T₁) und zweite innere Drehmitnehmer (65) mit einer zweiten Breite (B₂) und zweiten Tiefe (T₂) aufweisen und die Längsnuten (37, 38) des Einsteckende (14) erste Längsnuten (37) und zweite Längsnuten (38) aufweisen, wobei im verbundenen Zustand der Vorrichtung (10) die ersten inneren Drehmitnehmer (64) in die ersten Längsnuten (37) und die zweiten inneren Drehmitnehmer (65) in die zweiten Längsnuten (38) eingreifen.

5. Vorrichtung nach Anspruch 4, **dadurch gekennzeichnet, dass** die erste Tiefe (T₁) der ersten inneren Drehmitnehmer (64) und die zweite Tiefe (T₂) der zweiten inneren Drehmitnehmer (65) gleich sind und sich die zweiten Längsnuten (38) des Einsteckendes (14) zusätzlich über den ersten Außenkonusbereich (33) und den Nutbereich (34) erstrecken.

6. Vorrichtung nach Anspruch 5, **dadurch gekennzeichnet, dass** die erste Breite (B₁) der ersten inneren Drehmitnehmer (64) und die zweite Breite (B₂) der zweiten inneren Drehmitnehmer (65) gleich sind.

7. Vorrichtung nach einem der Ansprüche 4 bis 6, **dadurch gekennzeichnet, dass** die äußeren Drehmitnehmer (66, 67) des Zwischenelements (42) erste äußere Drehmitnehmer (66) mit einer dritten Breite (B₃) und dritten Tiefe (T₃) und zweite äußere Drehmitnehmer (67) mit einer vierten Breite (B₄) und vierten Tiefe (T₄) aufweisen und die äußeren Drehmitnahmenuten (53, 54) im Ringbund (51) des Grundkörpers (41) erste äußere Drehmitnahmenuten (53) und zweite äußere Drehmitnahmenuten (54) aufweisen, wobei im verbundenen Zustand des Grundkörpers (41) und des Zwischenelements (42) die ersten äu-ßeren Drehmitnehmer (66) in die ersten äußeren Drehmitnahmenuten (53) und die zweiten äußeren Drehmitnehmer (67) in die zweiten äußeren Drehmitnahmenuten (54) eingreifen.

8. Vorrichtung nach einem der Ansprüche 4 bis 7, **dadurch gekennzeichnet, dass** die unteren Drehmitnehmer (71, 72) erste untere Drehmitnehmer (71) mit einer fünften Breite (B₅) und fünften Tiefe (T₅) und zweite untere Drehmitnehmer (72) mit einer sechsten Breite (B₆) und sechsten Tiefe (T₆) aufweisen und die unteren Drehmitnahmenuten (55, 56) erste untere Drehmitnahmenuten (55) und zweite untere Drehmitnahmenuten (56) aufweisen, wobei im verbundenen Zustand des Grundkörpers (41) und des Zwischenelements (42) die ersten unteren Drehmitnehmer (71) in die ersten unteren Drehmitnahmenuten (55) und die zweiten unteren Drehmitnehmer (72) in die zweiten unteren Drehmitnahmenuten (56) eingreifen.

9. Vorrichtung nach Anspruch 8, **dadurch gekennzeichnet, dass** in einer Ebene (68) senkrecht zur Längsachse (22) der Werkzeugaufnahme (13) die ersten unteren Drehmitnehmer (71) mit den ersten inneren Drehmitnehmern (64) und die zweiten unteren Drehmitnehmer (72) mit den zweiten inneren Drehmitnehmern (65) fluchten.

10. Vorrichtung nach einem der Ansprüche 8 bis 9, **dadurch gekennzeichnet, dass** die fünfte Tiefe (T₅) der ersten unteren Drehmitnehmer (71) und die sechste Tiefe (T₆) der zweiten unteren Drehmitnehmer (72) gleich sind.

11. Vorrichtung nach Anspruch 10, **dadurch gekennzeichnet, dass** die fünfte Breite (B₅) der ersten unteren Drehmitnehmer (71) und die sechste Breite (B₆) der zweiten unteren Drehmitnehmer (72) gleich sind.

## Claims

1. Device (10) for transmitting a torque, which is produced by a drill (11), to a drill bit (12), comprising:
▪ a shank (14) having a first outer conical region (33), a groove region (34) and a second outer conical region (35), and longitudinal grooves (37, 38) extending parallel to a longitudinal axis (24) of the shank (14), and
▪ a tool fitting (13) which has a basic body (41), an intermediate element (42) and a locking device (43), wherein
- the intermediate element (42) is annular designed with an inner lateral surface (62), on which inner rotary drivers (64, 65) are arranged, an outer lateral surface (63), on which outer rotary drivers (66, 67) are arranged, and a base surface (61) connecting the inner lateral surface (62) and outer lateral surface (63),
- the basic body (41) has an inner conical region (48) and a rotary driving region (49) with an annular collar (51) and an annular shoulder (52), wherein outer rotary driving grooves (53, 54) are arranged in the annular collar (51), and
- the locking device (43) is adjustable parallel to a longitudinal axis (22) of the tool fitting (13) between a receiving position and a locking position, wherein the shank (14) is insertable into the tool fitting (13) in the receiving position and is connected to the tool fitting (13) in the locking position,
wherein, in the connected state of the device (10), the inner rotary drivers (64, 65) of the intermediate element (42) engage in the longitudinal grooves (37, 38) of the shank (14) and the outer rotary drivers (66, 67) of the intermediate element (42) engage in the outer rotary driving grooves (53, 54) of the annular collar (51),
**characterized in that** lower rotary drivers (71, 72) are arranged on the base surface (61) of the intermediate element (42) and lower rotary driving grooves (55, 56) are arranged in the annular shoulder (52), wherein, in the connected state of the basic body (41) and the intermediate element (42), the lower rotary drivers (71, 72) interact with the lower rotary driving grooves (55, 56).

2. Device according to Claim 1, **characterized in that** the lower rotary drivers (71, 72) are aligned with the inner rotary drivers (64, 65) in a plane (68) perpendicular to the longitudinal axis (22) of the tool fitting (13).

3. Device according to either of Claims 1 and 2, **characterized in that** the lower rotary drivers (71, 72) are aligned with the outer rotary drivers (66, 67) in a plane (68) perpendicular to the longitudinal axis (22) of the tool fitting (13).

4. Device according to one of Claims 1 to 3, **characterized in that** the inner rotary drivers (64, 65) of the intermediate element (42) comprise first inner rotary drivers (64) with a first width (B₁) and first depth (T₁) and second inner rotary drivers (65) with a second width (B₂) and second depth (T₂), and the longitudinal grooves (37, 38) of the shank (14) comprise first longitudinal grooves (37) and second longitudinal grooves (38), wherein, in the connected state of the device (10), the first inner rotary drivers (64) engage in the first longitudinal grooves (37) and the second inner rotary drivers (65) engage in the second longitudinal grooves (38).

5. Device according to Claim 4, **characterized in that** the first depth (T₁) of the first inner rotary drivers (64) and the second depth (T₂) of the second inner rotary drivers (65) are identical, and the second longitudinal grooves (38) of the shank (14) additionally extend over the first outer conical region (33) and the groove region (34).

6. Device according to Claim 5, **characterized in that** the first width (B₁) of the first inner rotary drivers (64) and the second width (B₂) of the second inner rotary drivers (65) are identical.

7. Device according to one of Claims 4 to 6, **characterized in that** the outer rotary drivers (66, 67) of the intermediate element (42) comprise first outer rotary drivers (66) with a third width (B₃) and third depth (T₃) and second outer rotary drivers (67) with a fourth width (B₄) and fourth depth (T₄), and the outer rotary driving grooves (53, 54) in the annular collar (51) of the basic body (41) comprise first outer rotary driving grooves (53) and second outer rotary driving grooves (54), wherein, in the connected state of the basic body (41) and the intermediate element (42), the first outer rotary drivers (66) engage in the first outer rotary driving grooves (53) and the second outer rotary drivers (67) engage in the second outer rotary driving grooves (54).

8. Device according to one of Claims 4 to 7, **characterized in that** the lower rotary drivers (71, 72) comprise first lower rotary drivers (71) with a fifth width (B₅) and fifth depth (T₅) and second lower rotary drivers (72) with a sixth width (B₆) and sixth depth (T₆), and the lower rotary driving grooves (55, 56) comprise first lower rotary driving grooves (55) and second lower rotary driving grooves (56), wherein, in the connected state of the basic body (41) and the intermediate element (42), the first lower rotary drivers (71) engage in the first lower rotary driving grooves (55) and the second lower rotary drivers (72) engage in the second lower rotary driving grooves (56).

9. Device according to Claim 8, **characterized in that** the first lower rotary drivers (71) are aligned with the first inner rotary drivers (64) and the second lower rotary drivers (72) with the second inner rotary drivers (65), in a plane (68) perpendicular to the longitudinal axis (22) of the tool fitting (13).

10. Device according to either of Claims 8 and 9, **characterized in that** the fifth depth (T₅) of the first lower rotary drivers (71) and the sixth depth (T₆) of the second lower rotary drivers (72) are identical.

11. Device according to Claim 10, **characterized in that** the fifth width (B₅) of the first lower rotary drivers (71) and the sixth width (B₆) of the second lower rotary drivers (72) are identical.

## Revendications

1. Dispositif (10) de transmission d'un couple de rotation, qui est produit par un appareil de forage (11), à un trépan (12), présentant :
■ une extrémité insérable (14) qui présente une première région conique extérieure (33), une région de rainure (34) et une deuxième région conique extérieure (35) ainsi que des rainures longitudinales (37, 38) qui s'étendent parallèlement à un axe longitudinal (24) de l'extrémité insérable (14), et
■ un logement d'outil (13) qui présente un corps de base (41), un élément intermédiaire (42) et un dispositif de verrouillage (43), dans lequel
- l'élément intermédiaire (42) est de forme annulaire avec une surface d'enveloppe interne (62), sur laquelle des éléments d'entraînement rotatifs internes (64, 65) sont disposés, une surface d'enveloppe externe (63), sur laquelle des éléments d'entraînement rotatifs externes (66, 67) sont disposés, et une surface de base (61) qui relie la surface d'enveloppe interne (62) et la surface d'enveloppe externe (63),
- le corps de base (41) présente une région conique intérieure (48) et une région d'entraînement rotative (49) comportant un rebord annulaire (51) et un épaulement annulaire (52), des rainures d'entraînement rotatives externes (53, 54) étant disposées dans le rebord annulaire (51), et
- le dispositif de verrouillage (43) étant déplaçable parallèlement à un axe longitudinal (22) du logement d'outil (13) entre une position de réception et une position de verrouillage, dans lequel l'extrémité insérable (14) peut être introduite dans le logement d'outil (13) dans la position de réception et est reliée au logement d'outil (13) dans la position de verrouillage,
dans lequel, dans l'état relié du dispositif (10), les éléments d'entraînement rotatifs internes (64, 65) de l'élément intermédiaire (42) viennent en prise dans les rainures longitudinales (37, 38) de l'extrémité insérable (14) et les éléments d'entraînements rotatifs externes (66, 67) de l'élément intermédiaire (42) viennent en prise dans les rainures d'entraînement rotatives externes (53, 54) du rebord annulaire (51),
**caractérisé en ce que** des éléments d'entraînement rotatifs inférieurs (71,72) sont disposés sur la surface de base (61) de l'élément intermédiaire (42) et des rainures d'entraînement rotatives inférieures (55, 56) sont disposées dans l'épaulement annulaire (52), les éléments d'entraînement rotatifs inférieurs (71, 72) coopérant avec les rainures d'entraînement rotatives inférieures (55, 56) dans l'état relié du corps de base (41) et de l'élément intermédiaire (42).

2. Dispositif selon la revendication 1, **caractérisé en ce que** les éléments d'entraînement rotatifs inférieurs (71, 72) sont alignés sur les éléments d'entraînement rotatifs internes (64, 65) dans un plan (68) perpendiculaire à l'axe longitudinal (22) du logement d'outil (13).

3. Dispositif selon l'une des revendications 1 et 2, **caractérisé en ce que** les éléments d'entraînement rotatifs inférieurs (71, 72) sont alignés sur les éléments d'entraînement rotatifs externes (66, 67) dans un plan (68) perpendiculaire à l'axe longitudinal (22) du logement d'outil (13).

4. Dispositif selon l'une des revendications 1 à 3, **caractérisé en ce que** les éléments d'entraînement rotatifs internes (64, 65) de l'élément intermédiaire (42) présentent des premiers éléments d'entraînement rotatifs internes (64) dotés d'une première largeur (B₁) et d'une première profondeur (T₁) et des deuxièmes éléments d'entraînement rotatifs internes (65) dotés d'une deuxième largeur (B₂) et d'une deuxième profondeur (T₂) et les rainures longitudinales (37, 38) de l'extrémité insérable (14) présentent des premières rainures longitudinales (37) et des deuxièmes rainures longitudinales (38), les premiers éléments d'entraînement rotatifs internes (64) venant en prise dans les premières rainures longitudinales (37) et les deuxièmes éléments d'entraînement rotatifs internes (65) venant en prise dans les deuxièmes rainures longitudinales (38) dans l'état relié du dispositif (10).

5. Dispositif selon la revendication 4, **caractérisé en ce que** la première profondeur (T₁) des premiers éléments d'entraînement rotatifs internes (64) et la deuxième profondeur (T₂) des deuxièmes éléments d'entraînement rotatifs internes (65) sont égales et les deuxièmes rainures longitudinales (38) de l'extrémité insérable (14) s'étendent en outre sur la première région conique extérieure (33) et la région de rainure (34).

6. Dispositif selon la revendication 5, **caractérisé en ce que** la première largeur (B₁) des premiers éléments d'entraînement rotatifs internes (64) et la deuxième largeur (B₂) des deuxièmes éléments d'entraînement rotatifs internes (65) sont égales.

7. Dispositif selon l'une des revendications 4 à 6, **caractérisé en ce que** les éléments d'entraînement rotatifs externes (66, 67) de l'élément intermédiaire (42) présentent des premiers éléments d'entraînement rotatifs externes (66) dotés d'une troisième largeur (B₃) et d'une troisième profondeur (T₃) et des deuxièmes éléments d'entraînement rotatifs externes (67) dotés d'une quatrième largeur (B₄) et d'une quatrième profondeur (T₄) et les rainures d'entraînement rotatives externes (53, 54) dans le rebord annulaire (51) du corps de base (41) présentent des premières rainures d'entraînement rotatives externes (53) et des deuxièmes rainures d'entraînement rotatives externes (54), les premiers éléments d'entraînement rotatifs externes (66) venant en prise dans les premières rainures d'entraînement rotatives externes (53) et les deuxièmes éléments d'entraînement rotatifs externes (67) venant en prise dans les deuxièmes rainures d'entraînement rotatives externes (54) dans l'état relié du corps de base (41) et de l'élément intermédiaire (42).

8. Dispositif selon l'une des revendications 4 à 7, **caractérisé en ce que** les éléments d'entraînements rotatifs inférieurs (71, 72) présentent des premiers éléments d'entraînements rotatifs inférieurs (71) dotés d'une cinquième largeur (B₅) et d'une cinquième profondeur (T₅) et des deuxièmes éléments d'entraînements rotatifs inférieurs (72) dotés d'une sixième largeur (B₆) et d'une sixième profondeur (T₆) et les rainures d'entraînement rotatives inférieures (55, 56) présentent des premières rainures d'entraînement rotatives inférieures (55) et des deuxièmes rainures d'entraînement rotatives inférieures (56), les premiers éléments d'entraînements rotatifs inférieurs (71) venant en prise dans les premières rainures d'entraînement rotatives inférieures (55) et les deuxièmes éléments d'entraînements rotatifs inférieurs (72) venant en prise dans les deuxièmes rainures d'entraînement rotatives inférieures (56) dans l'état relié du corps de base (41) et de l'élément intermédiaire (42).

9. Dispositif selon la revendication 8, **caractérisé en ce que** les premiers éléments d'entraînement rotatifs inférieurs (71) sont alignés sur les premiers éléments d'entraînement rotatifs internes (64) et les deuxièmes éléments d'entraînement rotatifs inférieurs (72) sont alignés sur les deuxièmes éléments d'entraînement rotatifs internes (65) dans un plan (68) perpendiculaire à l'axe longitudinal (22) du logement d'outil (13).

10. Dispositif selon l'une des revendications 8 et 9, **caractérisé en ce que** la cinquième profondeur (T₅) des premiers éléments d'entraînement rotatifs inférieurs (71) et la sixième profondeur (T₆) des deuxièmes éléments d'entraînement rotatifs inférieurs (72) sont égales.

11. Dispositif selon la revendication 10, **caractérisé en ce que** la cinquième largeur (B₅) des premiers éléments d'entraînement rotatifs inférieurs (71) et la sixième largeur (B₆) des deuxièmes éléments d'entraînement rotatifs inférieurs (72) sont égales.
